## Europäisches Patentamt

## European Patent Office

## Office européen des brevets

(11) Veröffentlichungsnummer: **0 042 962**
**A1**

(12) **EUROPÄISCHE PATENTANMELDUNG**

(21) Anmeldenummer: **81103739.9**

(22) Anmeldetag: **15.05.81**

(51) Int. Cl.³: **C 08 K 11/00**
**C 08 L 27/06**

(30) Priorität: **14.06.80 DE 3022468**

(43) Veröffentlichungstag der Anmeldung:
**06.01.82 Patentblatt 82/1**

(84) Benannte Vertragsstaaten:
**AT BE CH DE FR GB IT ·LI LU NL SE**

(71) Anmelder: **DYNAMIT NOBEL AKTIENGESELLSCHAFT**
**Patentabteilung Postfach 1209**
**D-5210 Troisdorf, Bez. Köln(DE)**

(72) Erfinder: **Spielau, Paul, Dr.**
**Van-Gogh-Platz 10**
**D-5210 Troisdorf-Eschmar(DE)**

(72) Erfinder: **Vohwinkel, Horst**
**Cranachstrasse 4**
**D-5210 Troisdorf-Eschmar(DE)**

(72) Erfinder: **Kühnel, Werner**
**D-5206 Neunkirchen-Schöneshof**
**D-5206 Neunkirchen-Schöneshof(DE)**

(54) **Formmassen auf Basis mit Estern verträglicher thermoplastischer und/oder elastomerer Kunststoffe.**

(57) Formmassen auf Basis mit Estern verträglicher thermoplastischer und/oder elastomerer Kunststoffe, enthaltend ggf. weitere Zusatzstoffe wie Weichmacher, Stabilisatoren, Pigmenten, Gleitmittel, Füllstoffe, Antioxydantien, hochpolymere Additive, Bitumen u.a., mit einem Gehalt an bei der Herstellung von Dimethylterephthalat anfallendem Destillationsrückstand.

EP 0 042 962 A1

Croydon Printing Company Ltd.

- 1 -

Troisdorf, den 25. April 1980
OZ          MG/Bd

DYNAMIT NOBEL AKTIENGESELLSCHAFT
Troisdorf, Bez. Köln

Formmassen auf Basis mit Estern verträglicher thermoplastischer und/oder elastomerer Kunststoffe

Die Erfindung bezieht sich auf Formmassen auf Basis mit Estern verträglicher thermoplastischer und/oder elastomerer Kunststoffe, enthaltend ggf. weitere Zusatzstoffe wie Weichmacher, Stabilisatoren, Pigmente, Gleitmittel, Füllstoffe, Antioxidantien, hochpolymere Additive, Bitumen u. a.

Der vorliegenden Anmeldung liegt die Aufgabe zugrunde, solche Formmassen durch Zusätze von preiswerten Materialien zu verbilligen, wobei jedoch im wesentlichen die Eigenschaften der Formmassen je nach Anwendungsbereich erhalten bleiben sollen.

- 2 -

Es wurde gefunden, daß sich diese Aufgabe überraschend und vorteilhaft lösen läßt durch die Verwendung von bei der Herstellung von Dimethylterephthalat anfallendem Destillationsrückstand als Zusatz zu den eingangs genannten Formmassen.

Bei der großtechnischen Herstellung von Terephthalsäuredimethylester (DMT) werden p-Xylol und p-Toluylsäureester gemeinsam oxidiert und anschließend verestert. Die bei der Veresterung anfallenden Produkte werden daraufhin getrennt. Bei dieser Trennung verbleiben ins Gewicht fallende Mengen von Nebenprodukten als Destillationsrückstand, siehe DT-PS 1 041 945, die als DMT-Destillationsrückstand bezeichnet werden.

Dieser DMT-Destillationsrückstand besteht aus einem Gemisch hochsiedender Produkte, die nach bekannten Verfahren großtechnisch nicht weiter destillativ getrennt werden können. Qualitativ wurden in diesem Gemisch bisher etwa 40 Verbindungen aus der Gruppe von hochsiendenden Säuren, Estern, Alkoholen und Aldehyden ermittelt. Zu diesen Verbindungen zählen z. B. Monomethylterephthalat, Terephtalsäure, Methylester von Diphenylcarbonsäuren und zweikernige Ester vom Typ des Toluyltoluats. Weiterhin enthält dieser Rückstand aber auch noch undestillierbare, nicht näher identifizierbare Kondensationsprodukte und teerartige Produkte. Der Anteil all dieser Produkte in diesem DMT-Destillationsrückstand unterliegt, je nach gegebener Prozeßführung, starken Schwankungen. Aus diesem Grund hat der DMT-Destillationsrückstand auch keine einheitlichen, physikalischen Daten. Das Eigenschaftsbild läßt sich wie folgt beschreiben:

Es handelt sich um tiefbraune bis fast schwarze Massen, die erst bei Temperaturen oberhalb 100°C einigermaßen, wenn auch noch sehr zäh fließen und bei Temperaturen über 150°C fließbar werden, die bei tieferen Temperaturen pastös erstarren und bei Raumtemperatur mehrphasig uneinheitlich in teigiger bis fester bzw. glasiger Konsistenz vorliegen. Die Säurezahl dieser Rückstände liegt im allgemeinen zwischen 10 und 30, kann jedoch auch 50 und mehr betragen. Die Verseifungszahlen liegen meist zwischen den Werten 400 und 450. Der DMT-Destillationsrückstand quillt mit Wasser, ist jedoch unlöslich in demselben. Zum Bitumen zeigt er eine gewisse Affinität und kann daher bei Anwendungen, die Bitumenverträglichkeit erfordern, eingesetzt werden.

Aufgrund der großtechnischen Bedeutung des Dimethylterephtalats für die Herstellung von Polyestern fällt der DMT-Destillationsrückstand in entsprechend großen Mengen an. Es sind bisher bereits viele Überlegungen angestellt worden, diesen Rückstand sinnvoll zu verwerten, siehe z. B. die DE-OS 24 29 352, wonach der DMT-Destillationsrückstand bis zu im wesentlichen vollständiger Ringsättigung hydriert wird, um dann z. B. mit Alkoholen zu Produkten mit Weichmachereigenschaften umgesetzt zu werden.

Es sind auch zahlreiche Versuche bekannt geworden, den DMT-Destillationsrückstand direkt zu verwerten, z. B. als Modifizierungsmittel für Phenolharze, siehe DE-OS 24 15 846 oder als Zusatz für Straßenmarkierungsmitteln, siehe SU-PS 572 478 u. a.

- 4 -

Die technische Realisierbarkeit dieser Vorschläge bzw. der verfahrenstechnische Aufwand, der hiermit verbunden ist, hat jedoch dazu geführt, daß auch heute noch der überwiegend größte Teil der DMT-Destillationsrückstände verbrannt wird, um wenigstens die Verbrennungsenergie zu nutzen und die Mülldeponien zu entlasten.

Mit der vorliegenden Erfindung werden nun gleichzeitig zwei Probleme gelöst, nämlich einerseits die Verwertung des DMT-Destillationsrückstandes und zum anderen die Verbilligung von Formmassen auf Basis mit Estern verträglicher thermoplastischer und/oder elastomerer Kunststoffe durch den Zusatz von DMT-Destillationsrückstand. Der DMT-Destillationsrückstand weist weichmacherähnliche Eigenschaften auf und wirkt damit sowohl als Weichmacher als zugleich als Füllstoff für die Formmasse. Er ermöglicht beispielsweise in weichmacherhaltigen Formmassen den Ersatz eines Anteiles an Weichmacher durch einen geeigneten Anteil von DMT-Destillationsrückstand.

Alle diejenigen thermoplastischen und elastomeren Kunststoffe, die mit Estern verträglich sind, zeigen auch eine überraschend gute Verträglichkeit mit DMT-Destillationsrückständen. Die gute Verträglichkeit der DMT-Destillationsrückstände mit den genannten Kunststoffen zeigt sich nicht nur darin, daß viele physikalische Eigenschaften solcher modifizierter Kunststofformmassen und der hieraus hergestellten Verarbeitungsprodukte erhalten bleiben, bzw. annähernd erhalten bleiben,sondern auch zusätzlich einige Eigenschaften verbessert erscheinen. Hervorzuheben ist hier die hohe Resistenz gegen Wasser, wasserabweisende Wirkung, die Schwerflüchtigkeit im Vergleich zu vielen Weichmachern, eine hohe Biostabilität, d. h. Resistenz gegen den Angriff von Bakterien, Pilzen und Mikroorganismen, die beispielsweise bei Anwendungen

- 5 -

im Hoch- und Tiefbau auftreten, sowie die Weichmacherwirkung. Das an sich gegenüber üblichen Weichmachern ungünstigere Verhalten von DMT-Rückstand in der Kälte kann
durch Zusatz höherer Mengen im Vergleich zu üblichen Weichmachermengen von DMT-Rückstand ausgeglichen werden. Insgesamt ist es möglich, durch Zusatz geeigneter Mengen von
DMT-Destillationsrückstand, die an·die jeweils herzustellenden Formmassen gestellten Anforderungsprofile der Eigenschaften zu erfüllen und gleichzeitig den Wirtschaftlichkeitsanforderungen Rechnung zu tragen.

Eine bevorzugte Gruppe thermoplastischer Kunststoffe
für die Anwendung der Erfindung sind Vinylharze, worunter
im weiteren Sinne Vinylchloride, Vinylacetate, Vinyläther,
Vinylfluorid, deren Polymerisationsprodukte und die Polymerisate der Methacrylsäure und ihrer Derivate zu verstehen sind. Eine bevorzugte erfindungsgemäß eingesetzte
Gruppe sind das Polyvinylchlorid und/oder die Mischpolymerisate des Vinylchlorids. Sie lassen sich vorteilhaft
durch Zusätze von DMT-Destillationsrückständen strecken,
wobei sie sich besonders vorteilhaft bei weichmacherhaltigen Polyvinylchloriden einsetzen lassen. Weich-PVC-
Formmassen zum Herstellen von Folien, Dichtungsbahnen,
Platten, Fußbodenbelägen usw. weisen bevorzugt ein Verhältnis von PVC zu Weichmacher von 85 zu 15 bis 50:50,
vorzugsweise 70:30 bis 60:40 auf. Erfindungsgemäß ist es
möglich, eine Teilmenge des Weichmachers durch DMT-
Destillationsrückstand zu ersetzen, ohne das Eigenschaftsbild der Formmasse und der hieraus hergestellten Produkte
wesentlich zu verändern, d.h.die geforderten Gebrauchseigenschaften werden noch erhalten. Hierbei können größere
Mengen von DMT-Destillationsrückstand für kleinere Mengen
von Weichmachern vorgesehen werden.

- 6 -

Bei der Verarbeitung von Formmassen auf PVC-Basis werden bevorzugt als Weichmacher Ester mehrbasischer Säuren mit einwertigen Alkoholen, insbesondere Phthalate, Ester der Adipinsäure und Sebacinsäure, Trimellithsäureester, Paraffin-Sulfonsäure-Phenyl/Kresyl-Ester eingesetzt. Beispielsweise hat sich überraschend herausgestellt, daß bei gemeinsamen Einsatz von Dioctyphthalat als Weichmacher und DMT-Destillationsrückständen die Weichmachereigenschaften des Dioctyphthalats erhalten bleiben.

Es können bereits geringe Mengen von DMT-Destillationsrückständen Formmassen nach der Erfindung zugesetzt werden, jedoch ist es vorteilhaft, DMT-Destillationsrückstand in einer Menge von zumindest 5 Gew.-Teilen pro 100 Gew.-Teile Kunststoff vorzusehen. Bei Formmassen auf Basis von Vinylharzen, insbesondere PVC- und Weich-PVC-Massen werden bevorzugt 20 bis 100 Gew.-Teile DMT-Destillationsrückstand auf 100 Gew.-Teile Kunststoff in der Formmasse vorgesehen. Hierbei kann die Formmasse zusätzlich Füllstoffe, wie Calciumcarbonate, Kaolin, Asbest, Ruß, Flugstaub, Aluminiumoxidtrihydrat, Silikate, Dolomit, Talkum, Glasfasern einzeln oder in Kombinationen je nach Anwendungs- und Verarbeitungsprodukt der Formmasse enthalten. Die Mengen können je nach Anforderungsprofil ganz unterschiedlich sein und werden bevorzugt im Bereich von 10 bis 100 Gew.-Teilen Füllstoffen pro 100 Gew.-Teile Kunststoffe angenommen. Die Formmassen können darüberhinaus neben einem Grundkunststoff auch noch zusätzliche Hoohpolymere mit speziellen Eigenschaften, wie Schlagzähmodifier oder Anteile weiterer mit diesen verträglichen Kunststoffe in Mischung enthalten.

Eine weitere Gruppe thermoplastischer Kunststoffe, die erfindungsgemäß eingesetzt werden können, sind Äthylen-Acrylat-Copolymer-Bitumen/Mischungen, Äthylenvinylacetat-Copolymer, chloriertes Polyäthylen, chlorsulfoniertes Polyäthylen oder Polyisobutylen einzeln oder auch in Mischungen untereinander.

Diese Gruppe thermoplastischer Kunststoffe ebenso wie das Weich-PVC und die Mischpolymerisate des Polyvinylchlorids haben eine spezielles Anwendungsgebiet bei der Herstellung von Dichtungsbahnen und Platten für das Bauwesen und für Fußbodenbeläge gefunden. Gerade für diese Anwendungen läßt sich die erfindungsgemäße Formmasse besonders vorteil einsetzen, wobei aus der Formmasse beispielsweise durch Extrudieren, Walzen, Kalandrieren oder Streichen, Folien, Bahnen oder Platten hergestellt werden können. Die vorteilhaften Eigenschaften des DMT-Destillationsrückstandes wie Wasserabweisung, Biostabilität und Schwerflüchtigkeit kommen bei diesen Anwendungen besonders vorteilhaft zur Geltung. Bevorzugt werden auch hier mindestens 10 Gew.-Teile DMT-Destillationsrückstand auf 100 Gew.-Teile Kunststoff eingesetzt, jedoch sind Gew.-Teile von 15 bis 40 je nach Anwendungsgebiet möglich und vorteilhaft.

Eine weitere Gruppe thermoplastischer Kunststoffe, die mit DMT-Destillationsrückstand verträglich und verarbeitbar sind, sind thermoplastische Massen auf Basis Celluloseester wie Celluloseacetat, Celluloseacetobutyrat, Celluloseacetopropionat, Cellulosenitrat, Cellulosepropionat.

- 8 -

Mit der vorliegenden Erfindung wird auch die Verwendung des bei der Herstellung von Dimethylterephthalat anfallenden Destillationsrückstandes als Zusatz zu mit Estern verträglichen thermoplastischen und/oder elastomeren Kunststoffen, die ggf. weitere Zusatzstoffe wie Weichmacher, Stabilisatoren, Pigmente, Füllstoffe, Hochpolymere Additive, Antioxidantien, Bitumen u. a. enthalten, insbesondere zum Herstellen von Bahnen, bzw. Platten für Abdichtungen im Hoch- und Tiefbau beansprucht.

Hochpolymer-Bahnen auf Basis thermoplastischer bzw. elastomerer Kunststoffe sind beispielsweise in der Zeitschrift "Kunststoffe im Bau" 14. Jahrg., 1979, Heft 4 Seiten 195 bis 201 aufgeführt. Alle diejenigen Kunststoff- oder Kautschukbahnen, die auf Basis von mit Estern verträglicher Kunststoffe aufgebaut sind, das sind also z. B. Äthylen-Copolymer-Bitumen-Bahnen, Äthylenvinylacetat-Copolymer-Bahnen, chlorierte Polyäthylen-Bahnen, Polyisobutylen-Bahnen, Polyvinylchlorid-Weichbahnen, chlorsulfonierte Polyäthylen-Bahnen, sind erfindungsgemäß mit DMT-Destillationsrückstand modifizierbar. Hierbei bleibt sowohl die Bitumenverträglichkeit der Bahnen, ihre Schweißbarkeit bzw. Verklebbarkeit erhalten, die Zugfestigkeiten werden im wesentlichen ebenfalls erhalten.

- 9 -

- 9 -

Die Erfindung wird nachfolgend an einigen Ausführungsbeispielen erläutert.

Die Ausführungsbeispiele 1 bis 9 befassen sich mit Formmassen auf Basis von PVC als thermoplastischem Kunststoff mit und ohne Weichmacher. Es werden die Auswirkungen der Zusätze von DMT-Destillationsrückstand auf das Verhalten von aus den Formmassen durch Walzen hergestellten Platten von 1 mm Dicke bei unterschiedlicher Formmassenzusammensetzung untersucht und in der beigefügten Tabelle 1 zusammengestellt.

Die Rezepturen der Beispiele 1 bis 10 enthalten ein PVC mit einem K-Wert von 70     , als Weichmacher-Diocylphthalat, DMT-Destillationsrückstand, übliche Gleitmittel, als Füllstoffe entweder natürliche Calciumcarbonate oder Flugstaub aus einer Elektrofilteranlage, das Walzverhalten ist nach üblichen Kriterien klebrig anhaftend oder nicht anhaftend, bzw. gut verarbeitbar beurteilt, desweiteren ist die Shorehärte A angegeben, die Zugfestigkeit in N/mm$^2$ nach DIN 53 455 die Dehnung in % nach DIN 53 455 und die Kältebruchtemperatur gemessen nach DIN 53 372.

Die Rezepturbestandteile der Beispiele 1 bis 10 wurden jeweils in einem Mischer vorgemischt und bei Temperaturen zwischen 140 und 160°C plastifiziert und auf Walzen bei Walzentemperaturen zwischen etwa 140 und 150°C zu Platten von 1 mm Dicke gewalzt. Das Beispiel 1 stellt eine normale Weich-PVC-Folie dar, wobei PVC und Weichmacher zusammen 100 Gew.-Teile ausmachen. Hinzu kommen 10 Gew.-Teile Füllstoff. Eine solche Folie wird üblicherweise im Bauwesen als Abdichtungsfolie für viele Anwendungen eingesetzt.

In den Beispielen 2 und 3 ist der Grundansatz gem. Beispiel 1 von 100 Gew.-Teilen PVC und Weichmacher durch Ersatz von 30 Gew.-Teilen DMT-Destillationsrückstand anteilig für Weichmacher und PVC verändert worden. Die Gleitmittelanteile sind geringfügig erhöht worden, um die Verarbeitbarkeit zu verbessern. Mit Zugaben von unterschiedlichen Mengen von Füllstoffen, hier Calciumcarbonat, werden Folien erzielt, deren Eigenschaften trotz des hohen Anteiles an DMT-Destillationsrückstand bei verringerten Anteilen an PVC dennoch als sehr brauchbar zu bezeichnen sind und die ebenfalls noch als Abdichtungsfolien im Bauwesen einsetzbar sind. Beispielsweise bieten sich für solche Folien mit einer geringfügig verringerten Kältefestigkeit Anwendungen als Estrichfolien, Schutzlagen, die lose verlegt werden, ggf. als Platten verlegt werden, oder als Agrarfolien usw. an.

In dem Beispiel 4 ist die Rezeptur nach Beispiel 2 nur bezüglich des Füllstoffes verändert worden, in dem an Stelle von Calciumcarbonat sehr preiswerter Flugstaub eingesetzt worden ist. Hier zeigt sich, daß die Werte für Zugfestigkeit, Dehnung und Kälteverhalten in der Tendenz geringfügig niedriger liegen als bei Verwendung von Calciumcarbonat als Füllstoff.

Beispiel 5 zeigt eine im Verhältnis zum Beispiel 2 variierte Zusammensetzung von PVC, Weichmacher und DMT-Rückstand, die auch ein geringfügig verändertes Eigenschaftsbild zeigt. Zugleich zeigt der Vergleich der Beispiele 2 und 5, daß auch ein hoher Zusatz von DMT-Destillationrückstand in weichgemachten PVC-Formmassen die Eigenschaften nur in geringem Umfange verändert.

Das Beispiel 7 zeigt eine Vergleichsrezeptur 65 Gew.-Teile PVC und 35 Gew.-Teile Weichmacher, zusammen 100 Gew.-Teile, die zu einer Weich-PVC-Folie ohne Füllstoffe verarbeitet wurde. Das Beispiel 8 zeigt eine erfindungsgemäße Ausführung, bei dem ein Teil des Weichmachers vom Beispiel 7 durch DMT-Destillationsrückstand ersetzt wurde. Die hieraus hergestellte Folie zeigt gegenüber dem Beispiel 7 erhöhte Shorehärte und Zugfestigkeit, jedoch verringerte Dehnung und verringerte Kältefestigkeit. Sie erfüllt dennoch das Anforderungsprofil vieler Anwendungen im Bauwesen, beispielsweise als Dichtungsfolie, Schutzlage, Bodenbelagsunterlage usw.

Das Beispiel 9 zeigt ein erfindungsgemäßes Beispiel für eine Hart-PVC-Folie, die durch Zusatz von DMT-Destillationsrückstand schlagzäh modifiziert wird. Im Beispiel 10 ist das Vergleichsbeispiel mit 100 Gew.-Teilen PVC ohne DMT-Destillationsrückstand aufgeführt, um die Eigenschaften vergleichen zu können.

In den Beispielen 11 und 12 ist der Einsatz von DMT-Rückstand mit Äthylenvinylacetat (EVA) mit 14 % Vinylacetatanteil ausgeführt. Die erhaltenen Folien nach Beispiel 12 zeigen bei Einsatz von DMT-Rückstand als Streckmittel ebenfalls noch ein Eigenschaftsbild, das den Vergleich mit den Folien aus reinem EVA gemäß Beispiel 11 aushält.

| Beispiele | 1 | 2 | 3 | 4 | 5 | 6 | 7 | 8 | 9 | 10 | 11 | 12 |
|---|---|---|---|---|---|---|---|---|---|---|---|---|
| EVA (Gew.-T.) | - | - | - | - | - | - | - | - | - | - | 100 | 85 |
| PVC K-Wert 70 (Gew.-T.) | 64 | 50 | 50 | 50 | 52 | 52 | 65 | 65 | 85 | 100 | - | - |
| DOP (Gew.-T.) | 36 | 20 | 20 | 20 | 24 | 24 | 35 | 24 | - | - | - | - |
| DMT-R.(Gew.-T.) | - | 30 | 30 | 30 | 24 | 24 | - | 11 | 15 | - | - | 15 |
| Stabilisatoren + Gleitmittel (Gew.-T.) | 1,7 | 3,3 | 3,3 | 3,3 | 3,3 | 2,7 | 2,7 | 2,7 | 2,7 | 2,7 | 3 | 3 |
| Calciumcarbonat (Gew.-T.) | 10 | 18 | 50 | - | 18 | - | - | - | - | - | - | 18 |
| Flugstaub (Gew.-T.) | - | - | - | 18 | - | - | - | - | - | - | - | - |
| Walzverhalten | gut | gut | gut | gut | gut | gut | gut | gut | gut | gut | gut | gut |
| Shorehärte A | 81 | 83 | 87 | 82 | 77 | 73 | 80 | 83 | 98 | 99 | 94 | 90 |
| Zugfestigkeit $(N/mm^2)$ | 17,7 | 15,3 | 11,5 | 12,8 | 15,3 | 16,5 | 20,3 | 25,3 | spröde | 50 | 19,0 | 10,8 |
| Dehnung (%) | 260 | 234 | 176 | 186 | 312 | 238 | 328 | 256 | spröde | 30 | 600 | 640 |
| Kältebruch-temperatur $^{\circ}C$ | -35 | -17 | + 9 | -15 | -7 | -14 | -39 | -19 | spröde | - | - | - |

- 1 -

Troisdorf, den 13.6.1980
OZ 80032 MG/Bd

Patentansprüche

1. Formmassen auf Basis mit Estern verträglicher thermoplastischer und/oder elastomerer Kunststoffe, enthaltend ggf. weitere Zusatzstoffe wie Weichmacher, Stabilisatoren, Pigmente, Gleitmittel, Füllstoffe, Antioxydantien, hochpolymere Additive, Bitumen u. a., g e k e n n z e i c h n e t   d u r c h   einen Gehalt an bei der Herstellung von Dimethylterephthalat anfallendem Destillationsrückstand.

2. Formmasse nach Anspruch 1, dadurch gekennzeichnet, daß der thermoplastische Kunststoff Vinylharz ist.

3. Formmasse nach Anspruch 2, dadurch gekennzeichnet, daß das Vinylharz Polyvinylchlorid und/oder Mischpolymerisate des Vinylchlorids sind.

4. Formmasse nach Anspruch 3, dadurch gekennzeichnet, daß sie zusätzlich Weichmacher im Verhältnis von PVC zu Weichmacher von 85:15 bis 50:50, vorzugsweise 70:30 bis 60:40 enthält.

5. Formmasse nach Anspruch 4, dadurch gekennzeichnet, daß eine Teilmenge des Weichmachers durch DMT-Destillationsrückstand ersetzt ist.

6. Formmasse nach Anspruch 4 oder 5, dadurch gekennzeichnet, daß die Weichmacher Ester mehrbasischer Säuren mit einwertigen Alkoholen, insbesondere Phthalate, Ester der Adipinsäure und Sebacinsäure, Trimellithsäureester, Paraffin-Sulfonsäure-Phenyl/Kresyl-Ester sind.

7. Formmasse nach einem der Ansprüche 1 bis 6, dadurch gekennzeichnet, daß sie DMT-Destillationsrückstand in einer Menge von zumindest 5 Gewichtsteilen pro

- 2 -

100 Gew.-Teile Kunststoff enthält.

8. Formmasse nach einem der Ansprüche 2 bis 7, dadurch gekennzeichnet, daß sie 20 bis100 Gew.-Teile DMT-Destillationsrückstand auf 100 Gew.-Teile Kunststoff enthält.

9. Formmasse nach einem der Ansprüche 2 bis 8, dadurch gekennzeichnet, daß sie zusätzlich Füllstoffe wie Calciumcarbonate, Kaolin, Asbest, Ruß, Flugstaub, Aluminiumoxidtrihydrat, Silikate, Dolomit, Talkum, Glasfasern in Mengen von 10 bis 100 Gew.-Teilen pro 100 Gew.-Teile Kunststoff enthält.

10. Formmasse nach Anspruch 1, dadurch gekennzeichnet, daß der thermoplastische Kunststoff Ethylen-Acrylat-Copolymer-Bitumen, Mischungen, Ethylen-Vinylacetat-Copolymer, chloriertes Polyäthylen, chlorsulfoniertes Polyäthylen oder Polyisobutylen ist.

11. Formmasse nach Anspruch 10, dadurch gekennnzeichnet, daß sie DMT-Destillationsrückstand in einer Menge von zumindest 10 Gew.-Teilen pro 100 Gew.-Teile Kunststoff enthält.

12. Formmasse nach Anspruch 10 oder 11, dadurch gekennzeichnet, daß sie 15 bis 40 Gew.-Teile DMT-Destillationsrückstand auf 100 Gew.-Teile Kunststoff enthält

13. Verwendung einer Formmasse gem. einem der Ansprüche 1 bis 12 zum Herstellen von Folien, Bahnen oder Platten, beispielsweise durch Extrudieren, Walzen, Kalandrieren

- 3 -

oder Streichen, insbesondere für **mehrschichtige** Verbundbeläge, sowie Abdichtungen und Schutzlagen im Hoch- und Tiefbau.

14. Verwendung des bei der Herstellung von Dimethyltere-phthalat anfallenden Destillationsrückstandes als Zusatz zu mit Estern verträglichen thermoplastischen und/oder elastomeren Kunststoffen, die ggf. weitere Hilfsstoffe wie Weichmacher, Stabilisatoren, Pigmente, Füllstoffe, Hochpolymere Additive, Antioxidantien oder Bitumen u. a. enthalten, insbesondere zum Herstellen von Bahnen bzw. Platten für Abdichtungen im Hoch- und Tiefbau.

**Europäisches Patentamt**

**EUROPÄISCHER RECHERCHENBERICHT**

EP 81 10 3739

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CHEMICAL ABSTRACTS, Band 80, Nr. 6, 11. Februar 1974, Seite 39, Nr. 27958g Columbus, Ohio, U.S.A. <br><br> & JP - A - 73 07502 (TEIJIN LTD.) 06-03-1973 <br><br> * Zusammenfassung * <br><br> -- | 1-14 |
|  | CHEMICAL ABSTRACTS, Band 80, Nr. 6, 11. Februar 1974, Seite 39, Nr. 27957f Columbus, Ohio, U.S.A. <br><br> & JP - A - 73 07501 (TEIJIN LTD.) 06-03-1973 <br><br> * Zusammenfassung * <br><br> -- | 1-14 |
| P | CHEMICAL ABSTRACTS, Band 93, Nr. 16, 20. Oktober 1980, Seite 41, Nr. 151204r Columbus, Ohio, U.S.A. <br><br> & SU - A - 599 535 (B. ZVIRONAITE et al.) 15-06-1980 <br><br> * Zusammenfassung * <br><br> -- | 1-14 |
| A | ENCYCLOPEDIA OF POLYMER SCIENCE AND TECHNOLOGY, Band 10, 1969, John Wiley & Sons, Seiten 245-249 New York, U.S.A. | 1,6 |

### KLASSIFIKATION DER ANMELDUNG (Int Cl.³)

C 08 K 11/00
C 08 L 27/06

### RECHERCHIERTE SACHGEBIETE (Int. Cl.³)

C 08 K 5/00
11/00
C 08 L 27/06
101/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 01-10-1981 | HOFFMANN |

EPA form 1503.1 06.78